(19) Europäisches Patentamt

European Patent Office

Office européen des brevets

(11) Numéro de publication : **0 040 136**
**B1**

(12) **FASCICULE DE BREVET EUROPÉEN**

(45) Date de publication du fascicule du brevet :
09.01.85

(21) Numéro de dépôt : 81400702.7

(22) Date de dépôt : 05.05.81

(51) Int. Cl.⁴ : **C 08 F 6/14, C 08 J 3/02, C 08 L 27/18**

(54) **Procédé de séparation du polymère d'une dispersion aqueuse de polytétrafluoréthylène préparée en présence d'un sel de lithium d'un acide perfluoroalcanesulfonique.**

(30) Priorité : 14.05.80 FR 8010793

(43) Date de publication de la demande :
18.11.81 Bulletin 81/46

(45) Mention de la délivrance du brevet :
09.01.85 Bulletin 85/02

(84) Etats contractants désignés :
DE FR GB IT NL

(56) Documents cités :
DE-A- 2 137 359
FR-A- 1 292 771
FR-A- 1 501 395
FR-A- 2 125 752
FR-A- 2 289 583
FR-A- 2 401 189
US-A- 3 752 789

(73) Titulaire : **ATOCHEM**
**12/16, allée des Vosges**
**F-92400 Courbevoie (FR)**

(72) Inventeur : **Blaise, Jean**
**23, Quai Perrache**
**F-69002 Lyon (FR)**
Inventeur : **Hérisson, Jean-Louis**
**Les Hauts de Brignais 5, Chemin de Bonneton**
**F-69530 Brignais (FR)**

(74) Mandataire : **Rochet, Michel et al**
**ATOCHEM Département Propriété Industrielle Cedex 22**
**F-92091 Paris la Défense (FR)**

## Description

La présente invention concerne un procédé de traitement des dispersions colloïdales aqueuses de polytétrafluoréthylène (PTFE) obtenues par polymérisation en émulsion du tétrafluoréthylène en présence du sel de lithium d'un acide perfluoroalcanesulfonique comme émulsifiant.

Selon les procédés connus on prépare les dispersions colloïdales aqueuses de PTFE en mettant en contact dans un autoclave résistant à la pression le monomère gazeux, ou un mélange de monomères dans le cas de la préparation de copolymères, avec une solution aqueuse contenant un agent d'amorçage susceptible de former des radicaux libres à la température de polymérisation, éventuellement un tampon pour maintenir le milieu à un pH donné, et un émulsifiant qui est généralement un sel alcalin ou d'ammonium d'un acide carboxylique ou sulfonique dont la chaîne carbonée ne porte que des atomes de fluor et éventuellement de chlore. La polymérisation est amorcée par des radicaux libres provenant de la décomposition d'un peroxyde hydrosoluble comme le peroxyde de succinyle ou d'un persulfate alcalin ou d'ammonium. Le persulfate est utilisé seul si la température de polymérisation est supérieure à 50 °C environ, ou en association avec un réducteur tel que sel ferreux, nitrate d'argent, bisulfite de sodium dans le cas contraire. Le pH peut être maintenu alcalin par un tampon, phosphate, pyrophosphate, borate alcalin ou d'ammonium.

La température de polymérisation est généralement comprise entre 5 °C et 100 °C, et la pression entre 1 et 100 bars et de préférence entre 10 à 25 bars.

Les qualités des produits finis fabriqués à partir de la poudre de PTFE comme par exemple les tubes, revêtement de fil, baguettes, rubans, dépendent de la méthode utilisée pour la production de la dispersion colloïdale aqueuse de PTFE. En particulier, la nature des ingrédients utilisés à la polymérisation peut avoir un effet sur la qualité des produits finis surtout si pour des raisons de productivité on ne désire pas laver la poudre après coagulation de la dispersion. Parmi les ingrédients qui peuvent avoir un effet sur la qualité des produits finis, se trouve l'émulsifiant ; les deux types d'émulsifiants les plus utilisés pour la polymérisation du TFE sont soit les sels d'acides carboxyliques perfluorés, soit les sels d'acides sulfoniques perfluorés. Les sels d'acides carboxyliques au nombre de carbone inférieur à 10 sont des produits solubles dans l'eau, donc faciles à mettre en œuvre, et se décomposant thermiquement, à moins de 300 °C, en dessous du point de fusion du PTFE, sans laisser de traces. Les sels d'acides sulfoniques en $C_6$ à $C_{16}$ sont des produits en général très peu solubles dans l'eau à température inférieure à 80-100 °C à l'exception du sel de lithium.

Les émulsifiants le plus souvent utilisés sont des sels fluorés ou chlorofluorés, en particulier des sels de sodium ou d'ammonium d'acide perfluoromonocarboxylique à 6 à 10 atomes de carbone, tel le perfluoroctanoate d'ammonium. Ils sont introduits en solution aqueuse, soit totalement au début de la polymérisation, soit progressivement au cours de la polymérisation, comme il est décrit dans le brevet français 1 550 055. Bien que ces émulsifiants donnent de bons résultats, ils présentent l'inconvénient d'être onéreux et difficiles à préparer. C'est pourquoi il leur est souvent substitué les sels d'acides sulfoniques et plus particulièrement les sels d'acides perfluoroalcanesulfoniques. Ces sels d'acides sulfoniques sont par contre difficiles à utiliser du fait de leur mauvaise solubilité dans le milieu aqueux à l'exception du sel de lithium.

Il a donc été envisagé d'utiliser comme émulsifiant le sel de lithium d'acides perfluoroalcanesulfoniques, ou, perfluoroalcanesulfonates de lithium et plus particulièrement les sels de formule $CF_3(CF_2)_nSO_3Li$, « n » étant un nombre entier compris entre 5 et 16. Ces produits n'ont cependant pu être utilement employés car, instables dès 350 °C, ils se dégradent en laissant des traces noires dans le PTFE.

La présente invention permet de rendre intéressante l'utilisation de ces sels de lithium comme émulsifiants dans la polymérisation du tétrafluoréthylène grâce à un traitement subséquent par un électrolyte de la dispersion colloïdale aqueuse de PTFE obtenue. Ce traitement permet d'obtenir finalement après coagulation de la dispersion un PTFE conservant sa blancheur.

Le traitement consiste en fait en un procédé de séparation du polymère de la dispersion colloïdale aqueuse de PTFE obtenue par polymérisation du tétrafluoréthylène en présence de $CF_3(CF_2)_nSO_3Li$ caractérisé en ce que, préalablement à la coagulation, on ajoute à la dispersion un hydroxyde basique ou un sel soluble alcalin ou alcalino-terreux à l'exception de l'hydroxyde ou d'un sel de lithium.

La quantité d'hydroxyde ou de sel soluble doit être suffisante pour déplacer en totalité le cation de l'émulsifiant. En principe une quantité stœchiométrique par rapport à la quantité d'émulsifiant est suffisante, bien qu'un léger excès d'électrolyte puisse être recommandé pour assurer l'échange substantiel du cation $Li^+$. Habituellement moins de 1 % en poids d'électrolyte par rapport au poids de PTFE de la dispersion colloïdale donne un résultat satisfaisant.

L'anion du sel est absolument sans influence sur l'action de ce dernier dans le procédé dans la mesure où le sel est soluble en milieu aqueux. En conséquence tout anion associé à un métal alcalin ou alcalino-terreux ou au groupement-$NH_4$ tel qu'on obtienne un sel soluble en milieu aqueux convient à l'objet de l'invention. Les meilleurs résultats sont obtenus de préférence avec les hydroxydes alcalins, le carbonate de potassium, le nitrate de sodium, l'oxalate de sodium.

Dans la dispersion colloïdale aqueuse de PTFE obtenue selon les procédés classiques de

2

polymérisation tels que décrits par exemple dans les brevets français 1 550 055, 1 019 304, 1 144 633, britannique 1 545 675, on mélange à température ambiante l'électrolyte de préférence mis préalablement en solution dans l'eau. Après ce traitement la dispersion est coagulée mécaniquement selon les procédés habituels. La poudre de PTFE est essorée et séchée à 160 °C.

Les exemples suivants permettent d'illustrer le procédé selon l'invention.

Afin d'examiner l'influence du procédé sur des objets finis, la poudre de PTFE obtenue a été traitée dans les conditions ci-après.

La poudre est mélangée avec 18 % en poids soit d'essence E, soit de Kérosène. Après agitation pendant 30 minutes par roulement dans un flacon, le mélange est conditionné à 25 °C pendant au moins quatre heures. Le mélange lubrifié est ensuite versé dans un moule et est amené à l'état de préforme en augmentant la pression jusqu'à une valeur de 2,0 MN/m² en 5 minutes. La pression est alors maintenue à 2,0 MN/m² pendant encore 5 minutes. La préforme est ensuite extrudée à 30 °C en utilisant une extrudeuse hydraulique ayant une vitesse de piston constante de 8,0 cm/minute. Le polymère est extrudé à travers une filière de 10 mm de diamètre comportant un poinçon central de 8 mm de diamètre. Le taux ou rapport de réduction, c'est-à-dire le rapport entre la surface de la section droite du cylindre renfermant le piston et la surface de la section droite de la filière, est approximativement de 90 : 1. La pression requise pour extruder le polymère dans ces conditions est mesurée au moyen d'un transducteur de pression. A la sortie de l'extrudeuse le tube « 8 × 10 » est séché en continu et fritté en continu à des températures d'environ 410 °C pendant des temps de quelques minutes. On peut également réaliser l'extrusion à travers une filière rectangulaire sans poinçon ; le jonc obtenu est calandré pour obtenir un ruban qui est ensuite séché, puis enroulé sur lui-même sous tension jusqu'à obtenir une certaine épaisseur d'enrubannage, puis fritté quelques minutes à 380-410 °C.

## Exemple 1

Une dispersion colloïdale aqueuse est obtenue par polymérisation du $C_2F_4$ à 15 °C dans un autoclave en acier inoxydable de 170 litres et muni d'un dispositif d'agitation. L'autoclave est chargé de 100 litres d'eau déminéralisée, 5 g de persulfate de potassium, 7,5 g de sel de Mohr, 400 g de phosphate dipotassique, 5 litres d'huile de paraffine, et 50 g de $C_8F_{17}SO_3Li$. Après dégazage on admet dans l'autoclave du $C_2F_4$ jusqu'à une pression relative de 21,6 bars. L'agitation est mise en route et la polymérisation démarre instantanément ce qui entraîne une baisse de la pression dans l'autoclave ; lorsque la pression atteint 19,6 bars, on remet du $C_2F_4$ jusqu'à 21,6 bars et ainsi de suite jusqu'à obtenir une dispersion dont la concentration en polytétrafluoréthylène atteint 25 à 30 % en poids. En cours de polymérisation, on rajoute de l'émulsifiant $C_8F_{17}SO_3Li$ en plusieurs fois jusqu'à atteindre une concentration finale de 0,244 % par rapport à l'eau.

Cette dispersion est divisée en plusieurs parties, l'une restant non traitée comme témoin, les autres étant respectivement traitées par une solution aqueuse de $K_2CO_3$, NaOH, KOH, $NaNO_3$, $Na_2(COO)_2$ ajoutée sous légère agitation. Après homogénéisation les différentes parties sont coagulées, essorées et séchées 15 heures à 160 °C. Les produits finis, après frittage d'environ 3 minutes à 410 °C pour les tubes, et de 30 minutes à 380 °C pour l'enrubannage, ont l'aspect indiqué dans le tableau ci-après.

| Electrolyte | % poids d'élec- trolyte par rap- port au poids de PTFE | Aspect du produit fini | |
|---|---|---|---|
| | | Tube 8 x 10 | Enrubannage |
| $K_2CO_3$ | 0,4 | blanc | blanc très peu de bulles |
| NaOH | 1 | blanc | blanc très peu de bulles |
| KOH | 1 | blanc | blanc très peu de bulles |
| $NaNO_3$ | 0,4 | blanc | blanc très peu de bulles |

# 0 040 136

(Suite)

| Electrolyte | % poids d'électrolyte par rapport au poids de PTFE | Aspect du produit fini | |
|---|---|---|---|
| | | Tube 8 x 10 | Enrubannage |
| Na$_2$(COO)$_2$ | 0,4 | blanc | blanc très peu de bulles |
| Témoin | 0 | légèrement gris points noirs | gris nombreuses bulles |

## Exemple 2

Des dispersions préparées selon l'exemple 1 sont traitées dans les mêmes conditions par NaCl, KCl, BaCl$_2$, CaCl$_2$, MgCl$_2$ et l'acétate de baryum, l'une étant conservée comme témoin.

Les produits extrudés sous forme de tubes sont frittés à 410 °C pendant au moins 6 minutes, et, ceux extrudés sous forme d'enrubannage sont frittés à 380 °C pendant au moins 60 minutes. Les produits obtenus après frittage ont l'aspect indiqué dans le tableau ci-après.

| Electrolyte | % poids d'électrolyte par rapport au poids de PTFE | Aspect du produit fini | |
|---|---|---|---|
| | | Tube 8 x 10 | Enrubannage |
| NaCl | 0,4 | blanc | blanc peu de bulles |
| KCl | 0,4 | blanc | blanc peu de bulles |
| BaCl$_2$ | 0,4 | blanc | blanc peu de bulles |
| CaCl$_2$ | 0,4 | blanc | blanc peu de bulles |
| MgCl$_2$ | 0,4 | blanc | blanc peu de bulles |
| (CH$_3$CO$_2$)$_2$Ba | 0,4 | blanc | blanc peu de bulles |
| Témoin | 0 | légèrement gris points noirs | gris points noirs bulles |

## Exemple 3

Soit une dispersion préparée selon l'exemple 1 mais avec un émulsifiant C$_7$F$_{15}$SO$_3$Li au lieu du C$_8$F$_{17}$SO$_3$Li. Cette dispersion est divisée en plusieurs parties et traitée selon l'exemple 1. L'aspect des produits finis, obtenus également dans les conditions de l'exemple 1, est donné dans le tableau ci-après.

4

| Electrolyte | % poids d'élec- trolyte par rap- port au poids de PTFE | Aspect du produit fini | |
|---|---|---|---|
| | | Tube 8 x 10 | Enrubannage |
| $K_2CO_3$ | 0,4 | blanc | blanc, homogène |
| NaOH | 1,0 | blanc | blanc, homogène |
| KOH | 1,0 | blanc | blanc, homogène |
| $NaNO_3$ | 0,4 | blanc | blanc, homogène |
| $Na_2(COO)_2$ | 0,4 | blanc | blanc, homogène |
| Témoin | 0 | gris points noirs | gris nombreuses bulles |

Exemple 4

Soit une dispersion préparée selon l'exemple 1 mais avec un émulsifiant du type $R_fSO_3Li$ où $R_f$ est un mélange en poids de $C_6F_{13}$ : 51 %, $C_8F_{17}$ : 26 %, $C_{10}F_{21}$ : 13 %, $C_{12}F_{25}$ : 6 %, $C_{14}F_{29}$ : 3 % et $C_{16}F_{33}$ : 1 %. Cette dispersion est divisée en plusieurs parties et les essais réalisés dans les conditions de l'exemple 1. Les résultats obtenus sont identiques à ceux de l'exemple 1.

**Revendications**

1. Procédé de séparation par coagulation du polymère, d'une dispersion colloïdale aqueuse de polytétrafluoréthylène, permettant d'en conserver ultérieurement sa blancheur, obtenue par polymérisation du tétrafluoréthylène en présence de perfluoroalcanesulfonate de lithium comme émulsifiant caractérisé en ce que, préalablement à la coagulation, on ajoute à la dispersion un hydroxyde basique ou un sel soluble d'ammonium, alcalin ou alcalino-terreux, à l'exception de l'hydroxyde ou d'un sel de lithium en quantité égale ou supérieure à la stœchiométrie et suffisante pour assurer l'échange substantiel du cation $Li^+$.

2. Procédé selon la revendication 1 caractérisé en ce que l'hydroxyde est un hydroxyde alcalin.

**Claims**

1. Process for isolating the polymer, by coagulation, from an aqueous colloidal dispersion of polytetrafluoroethylene, which process allows one ultimately to retain the whiteness of the polytetrafluoroethylene, the dispersion being obtained by polymerising tetrafluoroethylene in the presence of a lithium perfluoro-alkanesulphonate as emulsifier, characterised in that prior to the coagulation there is added to the dispersion a basic hydroxide or a soluble ammonium salt, alkali metal salt or alkaline earth metal salt, with the exception of a hydroxide or a salt of lithium, in an amount which is equal to or greater than the stoichiometric amount and is sufficient to ensure the substantial exchange of the $Li^+$ cation.

2. Process according to Claim 1, characterised in that the hydroxide is an alkali metal hydroxide.

**0 040 136**

**Ansprüche**

1. Verfahren zum Abtrennen des Polymeren aus einer kolloidalen wässrigen Dispersion von Polytetrafluoräthylen, die durch Polymerisation von Tetrafluoräthylen in Gegenwart von Lithiumperfluoralkansulfonat als Emulgator erhalten wurde, durch Koagulation, wobei der Weißgehalt des Polytetrafluoräthylens der Dispersion später beibehalten werden kann, dadurch gekennzeichnet, daß man der Dispersion vor der Koagulation ein basisches Hydroxid oder ein lösliches Salz von Ammonium, Alkali- oder Erdalkalimetallen in einer Menge zugibt, die gleich oder größer ist als die Stöchiometrie und die zum wesentlichen Austausch des Li$^+$-Kations ausreicht.

2. Verharen nach Anspruch 1, dadurch gekennzeichnet, daß das Hydroxid ein Alkalihydroxid ist.

6